# FASCICULE DE BREVET EUROPEEN

(11) **EP 1 197 097 B1**
(45) Date de publication et mention de la délivrance du brevet: **05.11.2008**
(21) Numéro de dépôt: 00990082.0
(22) Date de dépôt: 20.12.2000
(51) Int. Cl.: H04Q 3/00, H04Q 7/22, H04Q 7/24

(54) **PROCEDE ET TÉLÉPHONE DE TRANSMISSION DE MINI-MESSAGES**
VERFAHREN UND TELEFONGERÄT ZUM VERSENDEN VON KURZNACHRICHTEN
METHOD AND TELEPHONE FOR TRANSMITTING MINI-MESSAGES

(30) Priorité: 20.12.1999 FR 9916050
(43) Date de publication de la demande: 17.04.2002
(73) Titulaire: TCL & ALCATEL MOBILE PHONES LIMITED, China Hong Kong City, 33 Canton Road, Tsim Sha Tsui,Kowloon, Hong Kong (CN)
(72) Inventeur: TISSERAND, Bruno, F-92700 Colombes (FR); DAVIT, Luc, F-75014 Paris (FR)
(74) Mandataire: Feray, Valérie
(86) Numéro de dépôt international: PCT/FR2000/003614
(87) Numéro de publication internationale: WO 2001/047197

(56) Documents cités:
- EP-A- 1 009 153
- WO-A-00/24225
- GLITHO R H: "USE OF SS7 IN D-AMPS-BASED PCS: ORTHODOXY VS. HETERODOXY" IEEE PERSONAL COMMUNICATIONS,US,IEEE COMMUNICATIONS SOCIETY, vol. 4, no. 3, 1 juin 1997 (1997-06-01), pages 15-23, XP000655312 ISSN: 1070-9916

## Description

La présente invention a pour objet un procédé de transmission de mini-messages. Elle a également pour objet un dispositif d'émission et/ou de réception associé. L'invention s'applique au domaine des transmissions de données à travers un réseau de transmission. Elle s'applique plus particulièrement au domaine des transmissions où le réseau de transmission de données est un réseau de téléphonie mobile ou un réseau numérique à intégration de service, ou encore RNIS. Le but de l'invention est de transmettre des mini-messages, à travers le réseau de transmission, entre un appelant et un appelé et ce à moindre coût. Cependant, une application préférée de l'invention concerne la transmission d'un code de carte à puce à un centre d'authentification en utilisant comme réseau de transmission un réseau de téléphonie mobile.

Actuellement, on sait émettre un message d'un appelant vers un appelé à travers un réseau de transmission, un message étant une structure de données comportant de quelques octets voire quelques dizaines d'octets, on parlera alors de mini-messages, à plusieurs milliers d'octets. Pour émettre un message, il est nécessaire, dans l'état de la technique, d'établir une liaison de communication entre un appelant et un appelé, de transmettre ce message à travers cette liaison et enfin de supprimer cette liaison de communication une fois l'échange entre l'appelant et l'appelé terminé.

Une telle réalisation, dans le cas de l'émission de mini-messages, présente des problèmes. En effet, en se ramenant à l'échelle d'un mini-message, une durée nécessaire à l'établissement de la liaison de communication ajoutée à une durée de la communication ajoutée encore à la durée de la suppression de la liaison de communication donne une durée de transmission trop contraignante.

En outre, dans le cas où les mini-messages sont des codes de cartes à puce par exemple, on peut avoir plusieurs dizaines de milliers de transactions, à travers le réseau de transmission, chaque jour. Ce nombre élevé de transactions associé au mode de réalisation selon l'état de la technique conduit à une charge du réseau qui est tout à fait conséquente. Cette charge du réseau de transmission est appelée à augmenter de plus en plus suite à l'augmentation toujours croissante d'applications mettant en oeuvre une carte à puce ainsi qu'un nombre de transactions associées. Il est à préciser, en outre, que l'utilisation d'une liaison de communication à travers un réseau de transmission n'est pas gratuite. Il s'ensuit un coût non négligeable, vu le nombre de transactions, pour l'envoi de mini-messages.

La présente invention a pour objet de remédier à ces problèmes en proposant un procédé de transmission de tels mini-messages. Le procédé de l'invention permet de réduire le délai de transmission à une valeur la plus faible possible et ce en transmettant des données pendant la phase de signalisation associée à l'établissement d'une liaison de communication à travers un réseau de transmission. De plus, le procédé de l'invention permet de réduire les coûts de communication à travers le réseau de transmission.

L'invention propose en outre un téléphone permettant de mettre en oeuvre le procédé de l'invention.

L'invention a donc pour objet un procédé d'envoi d'un message utilisateur à travers un réseau de transmission caractérisé en ce que :
- on active une demande d'établissement d'un canal de communication entre un appelant et un appelé,
- on réalise, pour l'établissement du canal de communication, une phase de signalisation pendant laquelle un message de signalisation, comportant au moins un champ disponible, est échangé entre l'appelant et l'appelé,
- on place, avant l'échange entre l'appelé et l'appelant, dans le champ disponible du message de signalisation le message utilisateur,
- on met fin à l'établissement du canal de communication une fois le message utilisateur, et/ou une réponse au message utilisateur, reçu par l'appelé, et ou par l'appelant.

L'invention a également pour objet un téléphone selon la revendication 8.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une architecture simplifiée d'un téléphone mobile permettant de mettre en oeuvre le procédé de l'invention ;
- Figure 2 : une représentation, sous forme d'un algorithme, d'un exemple de fonctionnement du procédé de l'invention.

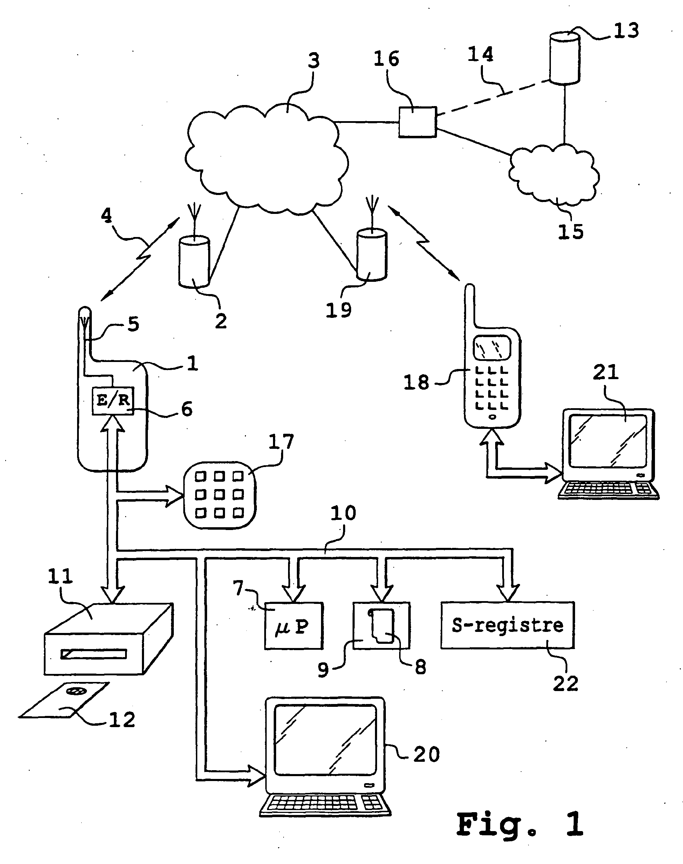

La figure 1 montre un exemple préféré d'application de l'invention. En effet, la figure 1 montre une architecture simplifiée d'un téléphone 1 mobile, mettant en oeuvre le procédé de l'invention, relié à une station 2 de base d'un réseau 3 de téléphonie mobile par une liaison 4 radioélectrique. Ainsi, le téléphone 1 est utilisé pour envoyer ou recevoir un message utilisateur, à travers un réseau de transmission tel que le réseau 3 par exemple. Pour assurer ces fonctions d'émission et de réception notamment, le téléphone 1 comporte une antenne 5 reliée à un dispositif 6 d'émission et de réception. Ce dispositif 6 est contrôlé par un microprocesseur 7 commandé par un programme 8 dans une mémoire de programme 9 par l'intermédiaire d'un bus 10 de données, de commandes et d'adresses.

Dans cet exemple préféré, le téléphone 1 est utilisé, outre sa fonction de téléphonie mobile usuelle, comme interface de communication, ou encore modem, entre un lecteur 11 d'une carte à puce 12 et un correspondant 13. Le lecteur 11 est, de manière préférée, placé dans le téléphone 1, mais pourrait très bien être seulement raccordé à ce dernier par une liaison filaire. Ainsi, le correspondant 13 est un centre d'authentification de la carte à puce 12. Le centre 13 est relié, directement par une liaison 14 où indirectement par un réseau 15 de téléphonie fixe par exemple, à un circuit 16 de connexion du réseau 3. Ainsi, le téléphone 1 envoi au centre 13 un code secret de la carte 12 ainsi qu'un numéro d'identification, le code secret et le numéro d'identification étant placés dans un champ disponible du message de signalisation. L'ensemble composé du code secret et du numéro d'identification est appelé par la suite identifiant.

Dans l'invention, on transmet le message utilisateur pendant une phase de signalisation associée à l'établissement d'une liaison de communication entre le téléphone 1 et le centre 13. En effet, on utilise pour cela un champ laissé disponible dans des messages de signalisation, échangés entre le téléphone 1 et le dispositif 13, tel que décrit notamment selon la norme GSM 04.08. Cette norme y définit de plus une procédure d'établissement d'une liaison de communication dans un réseau de téléphonie mobile, selon la norme GSM notamment.

Un champ disponible signifie qu'un message de signalisation est de longueur variable. Bien évidemment, lorsque le champ disponible n'est pas utilisé, on n'émet la partie correspondant à un champ donné que si celui-ci comporte une information. Un message de signalisation comporte ainsi différents champs, chacun relatif à un paramètre, dont un précise notamment une fonction associée à ce message. Il peut s'agir d'un message de commande ou d'un message de contrôle des différentes phases de signalisation nécessaires pour établir la liaison de communication.

Le code secret est produit à partir d'un clavier 17, par exemple du téléphone 1. Plus précisément, dans cet exemple préféré selon l'invention, lorsque la carte à puce 12 est insérée dans le lecteur 11 et qu'un code à été entré au clavier 17 alors le microprocesseur 7 active une demande d'établissement d'un canal de communication entre le téléphone 1 et le dispositif 13.

Selon une première caractéristique essentielle de l'invention le microprocesseur 7 utilise un des champs disponibles d'un message de signalisation, avant émission, pour y placer le message utilisateur. Dans l'invention, le message de commande qui est émit et qui comporte le message utilisateur, est un message spécial. Ce message spécial est un message de signalisation dont une valeur d'un paramètre permet d'indiquer à l'appelé lorsqu'il le reçoit, qu'un message se trouve dans le champ qui est normalement disponible. Pour réaliser cela, on peut utiliser une valeur prédéfinie qui indique que le protocole de communication est connu de l'appelant et de l'appelé. En conséquence, lorsque l'appelé reçoit un message de signalisation avec un tel paramètre alors il sait où se trouve le message utilisateur. Cependant, il est tout à fait envisageable de produire une nouvelle valeur en plus de celles prédéfinies et qui aboutirait au même résultat. Ainsi, le centre 13 émet à son tour un message de signalisation comportant cette fois-ci une réponse au message utilisateur, par exemple si l'authentification de la carte 12, en fonction de l'identifiant émis avec le message utilisateur, est positive ou négative.

Selon une deuxième caractéristique essentielle de l'invention, le microprocesseur 7 met fin à l'établissement du canal de communication une fois le message 4, et ou une réponse au message 4, reçu par l'appelé ou par l'appelant. C'est à dire, si le téléphone 1 émet un message 4 et n'attend pas de réponse de la part du centre 13 alors ce dernier peut mettre fin à l'établissement du canal de communication. Si par contre une réponse est attendue par le téléphone 1, puisque dans cet exemple il est l'émetteur du message utilisateur, alors c'est celui-ci qui devra mettre fin à l'établissement du canal de communication. En effet, on considère dans ce document que la communication est totalement établie lorsque l'appelé accepte l'appel, c'est à dire, plus simplement, lorsqu'il décroche. Dans l'invention, l'appelé ne décroche pas mais reçoit tout de même le message utilisateur par l'intermédiaire des messages de signalisation. En conséquence, le coût d'une communication est nul puisque généralement il faut décrocher pour activer un compteur d'unité de paiement.

Dans une variante le dispositif 13 ou l'appelé pourrait être un autre téléphone 18 mobile, relié à une station 19 de base par exemple du réseau 3. Dans ce cas, le téléphone 1 et le téléphone 18 peuvent échanger des mini-messages tels que les messages utilisateurs. De plus, le téléphone 1 peut être relié à un ordinateur 20 utilisant ainsi le téléphone 1 comme modem. De même, le téléphone 18 peut être relié à un ordinateur 21.

Lorsqu'un modem, ici le téléphone 1, établit un canal de communication, alors celui-ci échange des messages de signalisation avec l'appelé, par exemple le téléphone 18, alors un message de signalisation est associé avec un registre, c'est à dire une zone mémoire. Ainsi, lorsque le programme 8 commande une émission du message utilisateur, il l'associe avec un premier message de signalisation et lorsque le téléphone 1 reçoit une réponse au message utilisateur alors celui-ci est associé avec un deuxième message de signalisation. Cette commande est associée avec une mémoire 22 dédiée qui fait office de registre. En conséquence, lorsque le téléphone 1 reçoit une réponse au message utilisateur, alors celle-ci est automatiquement mémorisée dans la mémoire 22, sur commande d'un sous programme de gestion associé au programme 8 en général. Le fonctionnement est le même du côté du centre 13 ou du téléphone 18, c'est à dire que lorsque le centre 13 ou le téléphone 18 reçoivent le message utilisateur alors celui-ci est mémorisé dans une mémoire dédiée (non représenté) tel que la mémoire 22. Dans le cas des cartes à puces, le centre 13 mémorise ainsi dans une mémoire dédié une valeur du code secret ainsi qu'une valeur d'un numéro de la carte à puce 12 et une valeur mémorisée dans le registre 22 pourrait correspondre à un acquittement positif ou négatif par le centre 13 selon que le code à été accepté ou refusé respectivement.

Dans un exemple préféré, on autorise un utilisateur à accéder à la mémoire 22 par l'intermédiaire de commandes spécifiques. Ainsi, cet utilisateur peut y placer des valeurs à émettre et ou y lire des valeurs reçues. Pour cela, il utilise notamment le clavier 17 du téléphone 1 ou le clavier de l'ordinateur 20 si ce dernier est relié au téléphone 1. Dans un exemple, les commandes spécifiques sont des commandes de contrôle d'un modem. Cependant, un utilisateur pourrait, selon ses besoins, produire de nouvelles commandes spécifiques qui lui sont propres, on aurait alors des commandes dites propriétaires.

Dans une variante préférée de l'invention, on place la mémoire 22 dans le téléphone 1. Le fait d'utiliser une mémoire dédiée telle que la mémoire 22 permet d'avoir un fonctionnement plus souple du téléphone 1. En effet, on sait que lorsque l'on reçoit un tel message de signalisation alors il suffit d'effectuer une opération de lecture dans la mémoire dédiée associée, avec le sous programme précédent, pour déterminer la valeur correspondante au message 4 reçu. Le fonctionnement du téléphone 13 ou du téléphone 18 est le même que pour le téléphone 1 en ce qui concerne l'utilisation d'une mémoire dédié.

Dans une autre variante, on place la mémoire 22 dans un modem (non représenté) de type RNlS. Ces modems permettraient de relier un appelant à un appelé par l'intermédiaire d'un réseau RNIS qui serait alors utilisé en tant que réseau de transmission de l'invention. Dans ce cas, en prenant l'exemple de l'ordinateur 20, celui-ci serait relié aux modems au lieu d'être relié au téléphone 1. Une phase de signalisation à travers un réseau RNIS utilise des messages de signalisation comportant aussi, comme dans le cas du réseau 3 de téléphonie mobile, des champs disponibles.

Dans un exemple préféré de l'invention, la taille du message utilisateur est limitée à 35 octets au maximum. En effet, un champ disponible ne peut recevoir que des données dont une longueur binaire est inférieure à 35 octets.

La mémoire 22 a pour fonction de mémoriser le message utilisateur et ou la réponse au message utilisateur, ce message utilisateur et ou cette réponse sont à envoyer à l'aide d'un champ libre d'un message de signalisation. Ainsi, dans un exemple préféré, la mémoire 22 a une capacité mémoire qui est au plus de 35 octets. Dans une autre variante, et pour permettre une transmission sécurisée du message utilisateur à travers le réseau 3 d'une part et à travers l'espace libre d'autre part, on chiffre avec une clé de chiffrage afin de le rendre incompréhensible pour un tiers. Lorsque le destinataire du message utilisateur reçoit ce message utilisateur alors il utilise une clé de déchiffrement associé pour rendre compréhensible l'information portée par le message utilisateur.

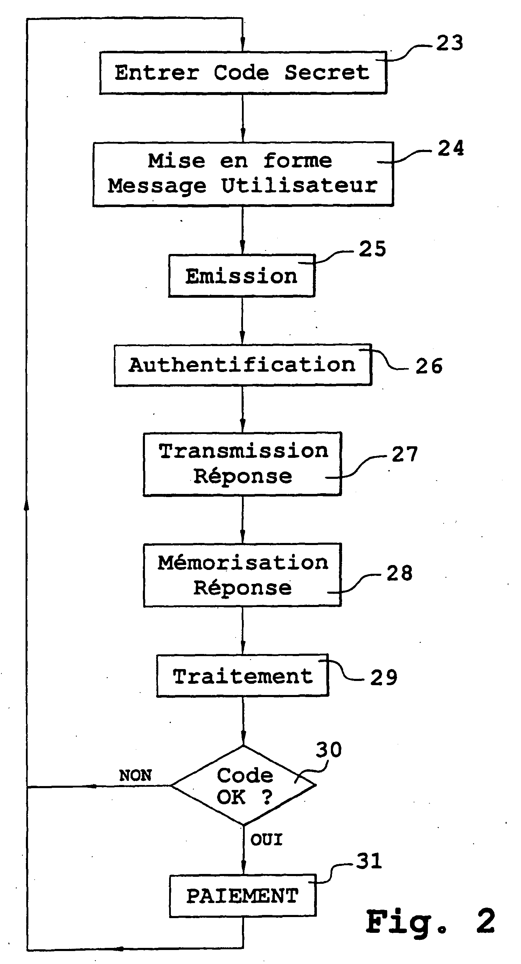

La figure 2 montre, sous forme d'un algorithme, un exemple de fonctionnement du procédé de l'invention. On utilise comme exemple le cas de d'authentification d'un code secret de carte à puce tel que la carte à puce 12. On utilise pour cela comme dispositif d'émission réception le téléphone 1 de la figure 1 avec le lecteur 11. Ainsi dans une étape 23, on entre associé à la carte à puce 12 à l'aide du clavier 17. Avant cela, bien évidemment, le téléphone 1 a été configuré selon un fonctionnement spécial, c'est à dire qu'il fonctionne comme un lecteur de carte à puce. Une valeur de ce code secret est mémorisée dans la mémoire 22 en attendant d'être émise.

Dans une étape 24 de mise en forme, le programme 8, ou plus précisément un sous programme de ce programme 8, commande le microprocesseur 7 pour envoyé le dispositif 6 d'émission réception la valeur mémorisée dans la mémoire 22 et ainsi de préparer le message utilisateur à émettre. Ce message utilisateur comporte la valeur du code secret, chiffrée dans un exemple préféré, et est insérée dans un champ disponible d'un message de signalisation. Dans une étape 25, le message de signalisation comportant le message 4 était mis à destination du centre 13 d'authentification dans cet exemple. Dans une étape 26, le centre 13 procède à l'authentification, après déchiffrage du code secret ici reçu associé notamment à un numéro d'identification de la carte à puce 12. Une fois cette authentification terminée, le centre 13, dans une étape 27, transmet la réponse associée à cette authentification au téléphone 1.

Le téléphone reçoit ainsi, dans une étape 28, une réponse au message utilisateur précédemment émit à l'étape 25 et mémorise la réponse du centre 13 dans la mémoire 22. Un programme de traitement associé au fonctionnement du téléphone 1 en lecteur de carte à puces récupère dans la mémoire 22, lors d'une étape 29, un contenu de cette mémoire 22. Si le message d'authentification est positif en sortie d'une étape 30 de test alors le microprocesseur 7 autorise, dans une étape 31, un paiement en informant pour cela un détenteur de la carte 12 par l'intermédiaire d'un message sonore et ou d'un message visuel. Dans le cas d'une authentification négative, l'autorisation, de l'étape 31, est refusée au détenteur de la carte à puce 12. On réduit ainsi, avec l'invention, un temps d'accès au centre 13 et donc un temps de réponse, tout en limitant par la même un coût de communication à travers le réseau 3.

Cette description est basée sur un exemple concernant l'authentification d'un code à carte à puce mais il est évident que le procédé de l'invention peut être utilisé pour transmettre n'importe quel message de quelques dizaine d'octets à un appelé. Ainsi, le domaine de l'invention concerne plus généralement la transmission de données à travers un réseau de transmission de type GSM ou RNIS.

## Revendications

1. Procédé d'envoi d'un message utilisateur à travers un réseau (3) de transmission, dans lequel :
- on active une demande d'établissement d'un canal de communication entre un appelant et un appelé,
- on réalise, pour l'établissement du canal de communication, une phase de signalisation pendant laquelle un message de signalisation, comportant au moins un champ disponible, est échangé entre l'appelant et l'appelé,
- on place, avant l'échange entre l'appelé et l'appelant, dans le champ disponible du message de signalisation le message utilisateur,
- on met fin à l'établissement du canal de communication une fois que le message utilisateur a été reçu par l'appelé, et/ou qu'une réponse au message utilisateur a été reçue par l'appelant.

2. Procédé selon la revendication 1 **caractérisé en ce que**:
- on mémorise le message utilisateur et/ou une réponse au message utilisateur dans une mémoire (22) dédiée du récepteur du message utilisateur et/ou de la réponse au message utilisateur respectivement.

3. Procédé selon la revendication 2 **caractérisé en ce que** :
- on autorise un utilisateur à accéder à la mémoire dédiée par l'intermédiaire de commandes spécifiques.

4. Procédé selon l'une des revendications 1 à 3 **caractérisé en ce que**:
- on place la mémoire dédiée dans un téléphone (1) mobile, le téléphone mobile étant utilisé comme modem, le réseau de transmission étant alors un réseau de téléphonie mobile.

5. Procédé selon l'une des revendications 1 à 3 **caractérisé en ce que**:
- on place la mémoire dédiée dans un modem de type RNIS, le modem permettant de relier l'appelant à l'appelé par l'intermédiaire d'un réseau RNIS utilisé en tant que réseau de transmission.

6. Procédé selon l'une des revendications 1 à 5 **caractérisé en ce que**:
- on limite la taille d'un message utilisateur à 35 octets maximum.

7. Procédé selon l'une des revendications 1 à 6 **caractérisé en ce que**:
- on chiffre, avec une clé de chiffrage, le message utilisateur avant émission,
- on déchiffre, avec une clé de déchiffrage, le message utilisateur à la réception.

8. Téléphone (1) comportant des moyens d'émission d'un message utilisateur à un appelé à travers un réseau de transmission **caractérisé en ce qu'**il comporte des moyens (5-8) pour émettre, pendant une phase de signalisation pour l'établissement d'un canal de communication avec un appelé, un message de signalisation à destination dudit appelé, et un moyen (7) pour placer avant l'émission dudit message de signalisation, ledit message utilisateur dans un champ disponible dudit message de signalisation, et pour mettre fin à l'établissement du canal de communication une fois que le message utilisateur a été reçu par l'appelé, et/ou qu'une réponse au message utilisateur a été reçue Par le téléphone.

9. Téléphone selon la revendication 8, **caractérisé en ce qu'**il comporte une mémoire (22) dédiée, la mémoire dédiée ayant pour fonction de mémoriser le message utilisateur et/ou la réponse au message utilisateur.

10. Téléphone selon la revendication 9 **caractérisé en ce qu'**une capacité mémoire de la mémoire dédiée est au plus de 35 octets.

## Claims

1. A method for sending a user message over a transmission network (3), wherein:
- a request for setting up a communication channel between a calling party and a called party is activated,
- for the setup of the communication channel, a signaling phase is produced during which a signaling message comprising at least one available field is exchanged between the calling party and the called party,
- before the exchange between the called party and the calling party, the user message is placed in the available field of the signaling message,
- setup of the communication channel is terminated once the user message has been received by the called party and/or a reply to the user message has been received by the calling party.

2. The method according to claim 1, **characterized in that**:
- the user message and/or a reply to the user message is stored in a dedicated memory (22) of the receiver of the user message and/or the reply to the user message, respectively.

3. The method according to claim 2, **characterized in that**:
- a user is authorized to access the dedicated memory via specific commands.

4. The method according to any of claims 1 to 3, **characterized in that**:
- the dedicated memory is placed within a mobile phone (1), the mobile phone being used as a modem, the transmission network then being a mobile telecommunications network.

5. The method according to any of claims 1 to 3, **characterized in that**:
- the dedicated memory is placed within an ISDN-type modem, with the modem allowing the calling party to be connected to the called party via an ISDN network used as the transmission network.

6. The method according to any of claims 1 to 5, **characterized in that**:
- the size of a user message is limited to a maximum of 35 bytes.

7. The method according to any of claims 1 to 6, **characterized in that**:
- the user message is encrypted with an encryption key before sending,
- the user message is decrypted with a decryption key upon receipt.

8. A telephone (1), comprising means for sending a user message to a called party over a transmission network, **characterized in that** it has means (5 to 8) for sending, during a signaling phase for setting up a communication channel with a called party, a signaling message to said called party, and means (7) for placing said user message, before sending said signaling message, in an available field of said signaling message, and for terminating the setup of the communication channel once the user message has been received by the called party, and/or a reply to the user message has been received by the telephone.

9. The telephone according to claim 8, **characterized in that** it comprises a dedicated memory (22), the dedicated memory having the function of storing the user message and/or the reply to the user message.

10. The telephone according to claim 9, **characterized in that** a memory capacity of the dedicated memory is a maximum of 35 bytes.

## Patentansprüche

1. Verfahren zum Senden einer Benutzernachricht über ein Übertragungsnetz (3), wobei:
- ein Antrag zum Einrichten eines Verbindungskanals zwischen einem anrufenden Teilnehmer und einem angerufenen Teilnehmer aktiviert wird,
- zum Einrichten des Verbindungskanals eine Signalisierungsphase durchgeführt wird, während der eine Signalisierungsnachricht, die mindestens ein verfügbares Feld umfasst, zwischen dem anrufenden Teilnehmer und dem angerufenen Teilnehmer ausgetauscht wird,
- vor dem Austausch zwischen dem angerufenen Teilnehmer und dem anrufenden Teilnehmer die Benutzernachricht in das verfügbare Feld der Signalisierungsnachricht eingesetzt wird,
- das Einrichten des Verbindungskanals beendet wird, sobald die Benutzernachricht von dem angerufenen Teilnehmer empfangen wurde und/oder eine Antwort auf die Benutzernachricht vom anrufenden Teilnehmer empfangen wurde.

2. Verfahren nach Anspruch 1, **dadurch gekennzeichnet, dass**:
- jeweils die Benutzernachricht und/oder eine Antwort auf die Benutzernachricht in einem reservierten Speicher (22) des Empfängers der Benutzernachricht und/oder der Antwort auf die Benutzernachricht gespeichert wird.

3. Verfahren nach Anspruch 2, **dadurch gekennzeichnet, dass**:
- ein Benutzer berechtigt wird, auf den reservierten Speicher über spezifische Befehle zuzugreifen.

4. Verfahren nach einem der Ansprüche 1 bis 3, **dadurch gekennzeichnet, dass**:
- der reservierte Speicher in ein Mobiltelefon (1) eingesetzt wird, wobei das Mobiltelefon als Modem verwendet wird, wobei das Übertragungsnetz dann ein Mobilfunknetz ist.

5. Verfahren nach einem der Ansprüche 1 bis 3, **dadurch gekennzeichnet, dass**:
- der reservierte Speicher in ein Modem vom Type ISDN eingesetzt wird, wobei das Modem es ermöglicht, den anrufenden Teilnehmer mit dem angerufenen Teilnehmer über ein ISDN-Netzwerk, das als Übertragungsnetz verwendet wird, zu verbinden.

6. Verfahren nach einem der Ansprüche 1 bis 5, **dadurch gekennzeichnet, dass**:
- die Größe einer Benutzernachricht auf ein Maximum von 35 Byte begrenzt ist.

7. Verfahren nach einem der Ansprüche 1 bis 6, **dadurch gekennzeichnet, dass**:
- die Benutzernachricht vor dem Senden mit einem Chiffrierschlüssel chiffriert wird,
- die Benutzernachricht nach dem Empfangen mit einem Dechiffrierschlüssel dechiffriert wird.

8. Telefon (1), umfassend Mittel zum Senden einer Benutzernachricht an einen angerufenen Teilnehmer über ein Übertragungsnetz, **dadurch gekennzeichnet, dass** es Mittel (5 bis 8) umfasst, um während einer Signalisierungsphase zum Einrichten eines Verbindungskanals mit einem angerufenen Teilnehmer eine Signalisierungsnachricht an den angerufenen Teilnehmer zu senden, und Mittel (7), um die Benutzernachricht vor dem Senden der Signalisierungsnachricht in ein verfügbares Feld der Signalisierungsnachricht zu setzen, und um das Einrichten des Verbindungskanals zu beenden, sobald die Benutzernachricht vom angerufenen Teilnehmer empfangen wurde und/oder eine Antwort auf die Benutzernachricht vom Telefon empfangen wurde.

9. Telefon nach Anspruch 8, **dadurch gekennzeichnet, dass** es einen reservierten Speicher (22) umfasst, wobei der reservierte Speicher die Aufgabe hat, die Benutzernachricht und/oder die Antwort auf die Benutzernachricht zu speichern.

10. Telefon nach Anspruch 9, **dadurch gekennzeichnet, dass** eine Speicherkapazität des reservierten Speicher ein Maximum von 35 Byte beträgt.
